# EUROPEAN PATENT SPECIFICATION

(11) **EP 1 036 503 B1**
(45) Date of publication and mention of the grant of the patent: **19.01.2005**
(21) Application number: 99105359.6
(22) Date of filing: 16.03.1999
(51) Int. Cl.: A23C 9/154, A23L 1/187

(54) **A liquid, sterilised food composition suitable to make heat-set gelled products and its preparation process**
Flüssige, sterilisierte Lebensmittelzubereitung zur Herstellung von hitzegelierenden Produkten und Verfahren ihrer Herstellung
Composition alimentaire liquide et stérilisée pour préparer des produits gélifiés par la chaleur et procédé de préparation

(43) Date of publication of application: 20.09.2000
(73) Proprietor: SOCIETE DES PRODUITS NESTLE S.A., 1800 Vevey (CH)
(72) Inventor: Munz-Schaerer, Daniela Doris, 3510 Konolfingen (CH); Jost, Rolf, 3065 Bolligen (CH)
(74) Representative: Thomas, Alain

(56) References cited:
- EP-A- 0 186 233
- EP-A- 0 616 774
- EP-A- 0 795 276
- EP-A- 0 820 704
- GB-A- 2 166 337
- US-A- 4 906 489
- US-A- 5 360 625
- DATABASE WPI Section Ch, Week 9510 Derwent Publications Ltd., London, GB; Class D13, AN 95-069246 XP002112589 & JP 06 343397 A (FUGETSUDO HONTEN YG), 20 December 1994 (1994-12-20) -& PATENT ABSTRACTS OF JAPAN vol. 95, no. 3, 28 April 1995 (1995-04-28) & JP 06 343397 A
- PATENT ABSTRACTS OF JAPAN vol. 013, no. 174 (C-589), 25 April 1989 (1989-04-25) & JP 01 005464 A (MEIJI MILK PROD CO LTD), 10 January 1989 (1989-01-10) -& DATABASE WPI Derwent Publications Ltd., London, GB; AN 89-049869 XP002112590

## Description

The present invention concerns a liquid, sterilised food composition based on milk, egg, cream and sugar, suitable to make heat-set gelled products.

It is already known to make heat-set gelled products, like pudding. One solution consists of mixing one volume of sweetened condensed milk with two volumes of milk and three eggs. The ingredients are then well mixed and baked according to a conventional oven heat treatment. The eggs lead to gel formation during the oven heat treatment. After cooling, a nice, well shaped pudding results.

The object of the present invention is to produce a UHT, ready to use pudding mix. The main difficulty in producing such a product is that the functional properties of the egg, that is mainly the gelation property, are lost during the high heat treatment. The EP Patent No. 186'233 concerns a ready to eat dessert product, like a pudding, wherein a whey protein concentrate obtained by ultrafiltration is subjected to a denaturing treatment followed by homogenization, then the other classical ingredients are added and the obtained mix is heat treated for obtaining the pudding. The problem with this way is that the addition of thickening agents, like starch and gelatine, remains necessary for obtaining the required gelling effect.The EP Patent 820'704 concerns a product based on egg which has the ability to emulsify and to expand and to gel on cooking : this patent is based on the presence of casein and of calcium, which allows the gellation by heat-treatment. The problem with the presence of calcium is the formation of a unpleasant taste, which is not acceptable for the consumer.

The JP Patent 06 343397 concerns an ice-cream and not a ready to use product to be gelled. Finally, the JP Patent 01 005464 concerns a custard pudding, but totally based on the presence of egg. There is no mention of the presence of a milk protein.

The object of the present invention is not to have a ready to eat, but a ready to use product, which has a shelf life of more than 6 months at room temperature with very accurate gelling properties by a classical oven heat-treatment, without an unpleasant taste.

The present invention concerns a liquid, sterilised food composition based on milk, egg and sugar, suitable to make heat-set gelled products, comprising from 4 to 10 % proteins, up to 15 % fats, up to 40 % carbohydrates, the remaining being minerals and water.

Under heat-set gelled products in the present specification, we understand pudding, which comprises any type of pudding, including whipped pudding and custard. The sterilised food composition according to the invention can be preserved at room temperature during between 6 and 12 months.

The composition according to the invention is packed in UHT-carton and opened just when the consumer wants to prepare its corresponding pudding or custard.

The conditions for the preparation of the pudding or custard are those known in the art, that is, cooking at around 180 °C oven temperature in a water bath during 1.5 hours.

Eggs are present in the composition, but the heat sterilisation leads to a loss of the gelling properties of the proteins of said eggs, but not of their favourable taste properties. This loss is replaced by the gelling property of sterilised whey protein. In the composition according to the invention, 30 to 60 % of the total proteins are composed of whey protein. The preferred amount of whey protein is 40 %, based on the total amount of protein. The other proteins are the proteins from egg (whole egg or egg yolk) and from milk solids non fat. Normally, the more whey protein in the composition, the firmer the gel of the oven cooked dessert. A preferred whey protein content of the liquid product is 4-7 %. Whey protein contents higher than 7 % lead to cheese like textures or flavours not well perceived in dessert products.

The pH of the ready to use composition is slightly in the acid range, that is between 5.4 and 6. The preferred pH range is between 5.4 and 5.8.

The presence of carbohydrates is important for obtaining a sweetening effect. The type of carbohydrates used is not critical : in addition to lactose and sucrose, maltodextrins or starch can be used. The amount of carbohydrates is normally comprised between 20 and 25 %. In all the specification, the percentages are given by weight of the final product. The water content of the composition according to the invention is comprised between 60 and 70 %, that means a solid content comprised between 30 and 40 %.

In a preferred embodiment of the composition of the invention, the proximate composition is: 6 % fats, 22 % carbohydrates, 7 % proteins , the remaining being minerals (ca. 1 %) and water.

The invention concerns further the process for the preparation of the above described composition , comprising the following steps :
- preparing an acid phase comprising a mixture of acid whey protein, eventually sugar and lactose and water,
- preparing a neutral phase comprising a mixture of skimmed milk, sugar, egg, cream and eventually skimmed milk powder or an alternative milk protein source,
- subjecting separately both phases to a sterilising process,
- combining both phases in an aseptic filling system into a packaging, which is finally sealed.

The aim of the invention is to manufacture a composition, which is ready to use, with a long shelf life, that is said composition must be heat treated. As known in the art, the egg, when heat-treated loses completely its gelation property. It is also known that whey protein has gelation properties, but, by a normal heat-treatment, said whey protein loses its functionality. For preserving the gelation properties of whey protein, the heat-treatment must be carried out at an acid pH. Taking in account that it is not possible to make the heat-treatment of the milk at a low pH, it is compulsory according to the process of the invention to make separately the heat-treatment of the acid whey protein and of the milk and egg phase.

The acid phase of whey protein is prepared by a pH comprised between 2 and 5, preferably at a pH of around 2.5-3.5. The preferred type of whey protein used is from acid whey (such as casein whey), but other whey protein sources can be used. The advantage of using whey protein produced from acid whey is that less mineral acid is required to adjust the pH of the acid phase. The preferred mineral acid for adjustment of pH is phosphoric acid, although other mineral acids such as sulfuric or hydrochloric acid may also be used. The acid phase may also contain a carbohydrate, like sucrose and/or lactose. The amount of whey protein in the acid phase is comprised between 5 and 10 %. The amount of carbohydrate in this phase is normally comprised between 0.1 and 10 %.

The neutral phase is normally a mixture of up to 20 % egg, up to 40 % skimmed milk, up to 25 % of cream and between 20 and 30 % of sugar. This neutral phase comprises preferably around 28 % of skimmed milk, around 16 % egg, 16 % of cream and 22 % of sugar. It is also possible to add in this neutral phase a certain amount of skimmed milk powder or another milk protein source. The content of this last ingredient is up to 10 %, normally around 7 %.

As already mentioned above, both phases must be separately sterilised. This sterilisation is preferably an UHT treatment, that means a heat treatment in a temperature range of 135 to 150 °C with holding times in the range 2 to 20 sec. The preferred mode of heating is by steam injection. After the sterilization, the neutral phase is homogenised.

After the cooling, both phases are combined and the filling is carried out in an aseptic filling system in a ratio acid phase: neutral phase comprised between 1:1 and 1:2.5. This ratio is in most cases near 1:1.5.

To illustrate the present patent application, examples of composition and processes are presented.

### Example 1

The acid phase has been prepared by dispersing 67 g/kg of acid whey protein concentrate (protein content 80% on solids) in water and correcting the pH from the initial value of 4.0 to 3.5 by addition of dilute phosphoric acid. The neutral phase has been prepared by mixing 215 g/kg of cream (38%fat) with 180 g/kg of skimmed milk, 50 g/kg of powdered milk protein concentrate (60% protein/solids),97g /kg of skim milk powder, 268g/kg of crystalline sucrose and 187g/kg of liquid whole egg.

The sterilisation of both phases is carried out in the same way. The product is pre-heated on a plate heat exchanger to 80°C and then UHT heated by steam injection to 148°C, holding time 5 s. The phases are flash cooled to 78 °C and the neutral phase only homogenised , prior to final cooling to about 4 °C. Both sterilised phases are pumped to and combined in a sterile tank and from there to the aseptic filling line, to be packaged in Tetra briks, which are then sealed. The weight ratio acid phase :neutral phase was in this case 1: 1.6.
The sterile liquid product has the following proximate composition :protein 8.2%, fat 5.7%, carbohydrates 21.8% and ash 1%; total solids content 36.8%.
Whey protein of the product accounted for ca 34% of the total protein, egg included.
The obtained composition can be preserved at ambient temperature for at least 6 months.When the content of the package is cooked in an oven at 180 °C during 30 min and then cooled in a refrigerator, a pudding with nice texture properties and pleasant taste is obtained.

### Example 2

An acid phase was produced by dispersing 90 g/kg of acid whey protein concentrate (80% protein/solids) in water; the resulting pH was 3.8. Dilute phosphoric acid was used to bring the pH to 3.0.This acid phase was UHT sterilized at 148°for 5 s .
A neutral phase was produced by mixing 280 g/kg of skimmed milk with 160 g/kg cream and 190 g/kg of liquid whole egg. 275 g/kg of crystalline sucrose and 94g /kg of skim milk powder were dissolved in this mixture, which, after appropriate dissolution of the solids, was subjected to UHT-sterilization performed under the same conditions as for the acid phase. In contrast to the former, a homogenisation step took place.
The mass ratio for mixing acid and neutral phases was 1:1.5 The final, sterile mixture was pumped from the aseptic tank to the aseptic filling machine and filled into carton briks.

The sterile liquid product had the following proximate composition : protein 7.2%, fat 4.6%, carbohydrates 21% and ash 0.8%. Whey protein in the product accounted for ca 46% of the total protein (egg included).

### Example 3

An acid phase was produced by dissolving 88 g/kg of acid whey protein concentrate and 100 g/kg of sucrose in water, and adjusting the pH of the solution to 3.5.The dispersion was UHT sterilized as in examples 1 and 2.
A neutral phase was prepared by dissolving 280 g/kg of sucrose with 380 g/kg skim milk and 225g /kg cream. 57 g/kg of skim milk powder was also dissolved in the mixture, after which pasteurized,liquid egg yolk, 60 g/kg was added.The liquid mix was UHT-sterilized as described in examples 1 and 2, including a single stage homogenization carried out at 78°-70°C for the neutral phase.
Acid and neutral phases were combined in a sterile tank in weight proportions of 1:1.43, prior to filling of the mixture in the aseptic filling machine.
The resulting sterile product had the following proximate composition : protein 5.8%, fat 5.6%, carbohydrates 20% and minerals 0.6%. Whey protein accounted for 54% of the total protein including the egg yolk.

## Claims

1. A liquid, sterilised food composition based on milk, egg, cream and sugar, suitable to make heat-set gelled products, comprising from 4 to 10 % proteins, up to 15 % fats, up to 40 % carbohydrates, the remaining being minerals and water and wherein 30 to 60 % of the total protein is whey protein.

2. A liquid, sterilised food composition according to claim 1 , wherein the pH of said composition is comprised between 5.4 and 6.0.

3. A liquid, sterilised food composition according to claims 1 or 2, wherein the carbohydrates consist of sucrose, lactose, maltodextrins and starch.

4. A liquid, sterilised food composition according to any of claims 1 to 3, wherein said composition has a solid content comprised between 30 and 40 %.

5. A process for the preparation of the composition according to any of claims 1 to 4, comprising the following steps :
- preparing an acid phase comprising a mixture of acid whey protein, eventually lactose, sucrose and/or other carbohydrates,
- preparing a neutral phase comprising a mixture of skimmed milk, sugar, egg and cream and eventually skimmed milk powder or another milk protein source,
- subjecting separately both phases to a sterilising process,
- combining both phases in an aseptic filling system into a packaging, which is finally sealed.

6. A process according to claim 5, wherein the acid phase has a pH comprised between 2 and 5, preferably between 2.5 and 3.5.

7. A process according to claims 5 or 6, wherein in the acid phase, the content of whey protein is comprised between 5 and 10 %.

8. A process according to any of claims 5 to 7, wherein the neutral phase comprises a mixture of up to 20 % egg, up to 40 % skimmed milk, up to 25 % of cream and between 20 and 30 % sugar.

9. A process according to claim 8, wherein the neutral phase comprises further up to 10 % skimmed milk powder.

10. A process according to any of claims 5 to 9, wherein a sterilisation is carried out separately on each phase using sterilisation temperatures in the range of 135 to 150 °C and holding times between 2 and 20 sec.

11. A process according to any of claims 5 to 10, wherein the phases are combined in an aseptic filling system in a mass ratio acid phase:neutral phase comprised between 1:1 and 1:2.5.

## Patentansprüche

1. Flüssige, sterilisierte Nahrungsmittelzusammensetzung auf der Basis von Milch, Ei, Sahne und Zucker, die zur Herstellung wärmeverfestigter gelierter Produkte geeignet ist, die von 4 bis 10 % Proteine, bis zu 15 % Fett, bis zu 40 % Kohlenhydrate aufweist, wobei der Rest Mineralstoffe und Wasser sind, und wobei 30 bis 60 % des gesamten Proteins Molkenprotein sind.

2. Flüssige, sterilisierte Nahrungsmittelzusammensetzung nach Anspruch 1, wobei der pH der Zusammensetzung zwischen 5,4 und 6,0 liegt.

3. Flüssige, sterilisierte Nahrungsmittelzusammensetzung nach den Ansprüchen 1 oder 2, wobei die Kohlenhydrate aus Saccharose, Lactose, Maltodextrinen und Stärke bestehen.

4. Flüssige, sterilisierte Nahrungsmittelzusammensetzung nach irgendeinem der Ansprüche 1 bis 3, wobei die Zusammensetzung einen Feststoffgehalt zwischen 30 und 40 % aufweist.

5. Verfahren zur Herstellung der Zusammensetzung nach irgendeinem der Ansprüche 1 bis 4, das die folgenden Stufen umfaßt:
- Herstellen einer sauren Phase, die eine Mischung aus saurem Molkenprotein, ggf. Lactose, Saccharose und/oder anderen Kohlenhydraten umfaßt,
- Herstellen einer neutralen Phase, die eine Mischung aus Magermilch, Zucker, Ei und Sahne und ggf. Magermilchpulver oder einer anderen Milchproteinquelle umfaßt,
- Unterwerfen beider Phasen, getrennt voneinander, einem Sterilisierprozeß,
- Vereinigen beider Phasen in einem aseptischen Füllsystem in einer Verpackung, die abschließend verschlossen wird.

6. Verfahren nach Anspruch 5, wobei die saure Phase einen pH zwischen 2 und 5 aufweist, vorzugsweise zwischen 2,5 und 3,5.

7. Verfahren nach den Ansprüchen 5 oder 6, wobei in der sauren Phase der Gehalt an Molkenprotein zwischen 5 und 10 % liegt.

8. Verfahren nach irgendeinem der Ansprüche 5 bis 7, wobei die neutrale Phase eine Mischung aus bis zu 20 % Ei, bis zu 40 % Magermilch, bis zu 25 % Sahne und zwischen 20 und 30 % Zucker aufweist.

9. Verfahren nach Anspruch 8, wobei die neutrale Phase außerdem bis zu 10 % Magermilchpulver umfaßt.

10. Verfahren nach irgendeinem der Ansprüche 5 bis 9, wobei eine Sterilisation getrennt für jede der Phasen durchgeführt wird, wobei man Sterilisationstemperaturen im Bereich von 135 bis 150°C und Haltezeiten zwischen 2 und 20 s anwendet.

11. Verfahren nach irgendeinem der Ansprüche 5 bis 10, wobei die Phasen in einem aseptischen Abfüllsystem in einem Massenverhältnis von saurer Phase:neutraler Phase kombiniert werden, das zwischen 1:1 und 1:2,5 liegt.

## Revendications

1. Composition alimentaire stérilisée liquide à base de lait, d'oeuf, de crème et de sucre, convenant pour la fabrication de produits gélifiés durcis à chaud, contenant 4 à 10 % de protéines, jusqu'à 15 % de matières grasses, jusqu'à 40 % de glucides, le reste étant constitué de substances minérales et d'eau, et dans laquelle 30 à 60 % de la protéine totale consiste en protéine de lactosérum.

2. Composition alimentaire stérilisée liquide selon la revendication 1, dans laquelle le pH de ladite composition est compris entre 5,4 et 6,0.

3. Composition alimentaire stérilisée liquide selon la revendication 1 ou 2, dans laquelle les glucides consistent en saccharose, lactose, maltodextrines et amidon.

4. Composition alimentaire stérilisée liquide selon l'une quelconque des revendications 1 à 3, dans laquelle ladite composition a une teneur en matière sèche comprise entre 30 et 40 %.

5. Procédé de préparation de la composition selon l'une quelconque des revendications 1 à 4, comprenant les étapes suivantes :
- préparer une phase acide comprenant un mélange de protéine de lactosérum acide, facultativement du lactose, du saccharose et/ou d'autres glucides,
- préparer une phase neutre comprenant un mélange de lait écrémé, de sucre, d'oeuf et de crème et facultativement du lait écrémé en poudre ou une autre source de protéine du lait,
- soumettre séparément les deux phases à un procédé de stérilisation,
- combiner les deux phases dans un système de remplissage aseptique dans un emballage qui est finalement scellé.

6. Procédé selon la revendication 5, dans lequel la phase acide a un pH compris entre 2 et 5, de préférence entre 2,5 et 3,5.

7. Procédé selon la revendication 5 ou 6, dans lequel, dans la phase acide, la teneur en protéine de lactosérum est comprise entre 5 et 10 %.

8. Procédé selon l'une quelconque des revendications 5 à 7, dans lequel la phase neutre comprend un mélange de jusqu'à 20 % d'oeuf, jusqu'à 40 % de lait écrémé, jusqu'à 25 % de crème et entre 20 et 30 % de sucre.

9. Procédé selon la revendication 8, dans lequel la phase neutre comprend, de plus, jusqu'à 10 % de lait écrémé en poudre.

10. Procédé selon l'une quelconque des revendications 5 à 9, dans lequel une stérilisation est effectuée séparément sur chaque phase en utilisant des températures de stérilisation dans l'intervalle de 135 à 150°C et des temps de maintien compris entre 2 et 20 secondes.

11. Procédé selon l'une quelconque des revendications 5 à 10, dans lequel les phases sont combinées dans un système de remplissage aseptique en un rapport en masse de phase acide:phase neutre compris entre 1:1 et 1:2,5.
